# EUROPÄISCHE PATENTANMELDUNG

(11) **EP 3 001 543 A1**
(43) Veröffentlichungstag der Anmeldung: **30.03.2016**
(21) Anmeldenummer: 14186855.4
(22) Anmeldetag: 29.09.2014
(51) Int. Cl.: H02K 3/34, H02K 3/40, H02K 15/12

(54) **Aktivteil, Rotor, Stator, elektrische Maschine und Verfahren zur Herstellung eines solchen Aktivteils**

(71) Anmelder: Siemens Aktiengesellschaft, 80333 München (DE)
(72) Erfinder: Grübel, André, 90768 Fürth (DE); Schirm, Dieter, 96149 Breitengüßbach (DE)

(57) **Zusammenfassung**

Die Erfindung betrifft ein Aktivteil (1, 2) einer elektrischen Maschine, insbesondere einen Rotor (1) oder einen Stator (2). Zur Verbesserung der Widerstandsfähigkeit des Aktivteils (1, 2) sind in Bereichen, zwischen einem Grundkörper (1a, 2a), beispielsweise einem Blechpaket, und der Vergussmasse (5) dort ein elastisches Material (E) eingefügt, wo mechanische Spannungen aufgrund von unterschiedlichen Wärmeausdehnungen die Gefahr einer Rissbildung in der Vergussmasse (5) verursachen können. Beispielsweise wird das elastische Material (E) im Bereich von Nutgrenzen (11) zwischen dem Grundkörper (1a, 2a) und der Vergussmasse (5) eingefügt, wobei die Vergussmasse (5) die Wicklung (3) umgibt.

## Beschreibung

Die Erfindung betrifft ein Aktivteil. Die Erfindung betrifft weiter einen Stator und einen Rotor sowie eine elektrische Maschine mit einem solchen Stator und/oder einen solchen Rotor. Weiter betrifft die Erfindung ein Verfahren zur Herstellung eines solchen Aktivteils.

Gegenwärtig werden Wicklungen in einem Stator oder einem Rotor mit einer Vergussmasse ummantelt. In der Regel verläuft eine solche ummantelte Wicklung durch eine Aussparung. Die Aussparung ist in einen Grundkörper eingebracht, wobei der Grundkörper meist als Blechpaket ausgestaltet ist. Nachteilig treten bei Herstellung sowie längerem Betrieb eines Aktivteils thermische Belastungen auf, die durch materialabhängige Wärmeausdehnungskoeffizienten zu mechanischen Belastungen des Aktivteils führen.

Gemäß dem Stand der Technik sind Vergussverfahren für Statoren und Rotoren bekannt, wobei beispielsweise die DE 10 2008 003 784 A1 ein Verfahren zum Vollverguss eines Stators beschreibt.

Weiter beschreibt die DE 197 15 920 A1 ein Verfahren zum Bilden eines Statoraufbaus, wobei die Statorwicklungen nach der Positionierung mit einem Epoxydharz getränkt werden.

EP 2 113 991 A1 beschreibt einen vergossenen Stator mit Wicklungen und ein Verfahren zur Herstellung eines solchen.

Der Erfindung liegt die Aufgabe zugrunde, ein verbessertes Aktivteil bereitzustellen.

Die Aufgabe wird mit einem Aktivteil gemäß Anspruch 1 gelöst.

Die Aufgabe wird weiter durch einen Rotor nach Anspruch 9 sowie durch einen Stator nach Anspruch 10 gelöst.

Die Aufgabe wird weiter durch eine elektrische Maschine gemäß Anspruch 11 gelöst.

Die Aufgabe wird zudem durch ein Verfahren zur Herstellung eines solchen Aktivteils gemäß Anspruch 12 gelöst.

Der Erfindung geht die Erkenntnis voraus, dass stromdurchflossene Wicklungen Wärmeenergie abgeben. Die Wärmeenergie führt zur Erwärmung der Wicklung, der Vergussmasse sowie des Grundkörpers. Die Erwärmung führt je nach Wärmekoeffizient zu einer unterschiedlichen Ausdehnung des Aktivteils, der Wicklung und der Vergussmasse. Durch die unterschiedliche Ausdehnung entstehen mechanische Spannungen in dem Aktivteil, die zu einer verminderten Lebensdauer des Aktivteils führen können.

Ein hier beschriebenes Aktivteil weist vorteilhaft einen Grundkörper und zumindest eine Wicklung auf, wobei die Wicklung von einer Vergussmasse umschlossen ist, wobei das Aktivteil zumindest bereichsweise zwischen der Vergussmasse und dem Grundkörper ein elastisches Material aufweist.

Unter einem Aktivteil wird ein Stator oder ein Rotor, insbesondere einer elektrischen Maschine verstanden. Ein Aktivteil kann jedoch auch ein Transformator (Spannungsumsetzer) oder eine Spule mit einem Grundkörper (Kern) sein. Allgemein ist ein Aktivteil einer elektrischen Maschine ein Teil, welches einen (aktiven) Beitrag zur Funktion der elektrischen Maschine liefert.

Unter einem Grundkörper wird das tragende Element des Aktivteils verstanden. In der Regel weist der Grundkörper ein Blechpaket auf. Das Blechpaket weist die Aussparungen aufgrund von (übereinanderliegenden) Ausstanzungen in den einzelnen Blechen des Blechpaktes auf. Ein Grundkörper kann auch ein massiv gefertigtes Bauteil sein, beispielsweise ein massiver Spulengrundkörper sein. Ein massiver Spulengrundkörper besteht vorteilhaft aus Ferrit. Ein Grundkörper kann eine Aussparung oder mehrere Aussparungen aufweisen. Insbesondere kann eine Aussparung eine durch den Grundkörper verlaufende Öffnung sein. Eine Aussparung wird hier auch als Nut bezeichnet. Die zumindest eine Wicklung des Aktivteils ist vorteilhaft in der Aussparung bzw. in der Nut lokalisiert wobei die Enden der Wicklung aus der Aussparung/Nut herausstehen.

Unter einer Vergussmasse wird eine chemische Verbindung verstanden, die, insbesondere nach einem Prozess des Aushärtens, einen Feststoff bildet. Ein Aushärten kann ein chemisch ablaufender Prozess sein, der durch einen Härter, durch Strahlungseinwirkung und/oder durch Wärmeeinwirkung erfolgt.

Anstelle einer Vergussmasse kann die Wicklung auch mit einer Vergussmasse ummantelt sein, wobei die Vergussmasse unterschieliche Zusammensetzungen in unterschiedlichen Bereichen aufweist.

Unter einer Nut wird eine Aussparung in dem Grundkörper verstanden, wobei die Nut in der Regel auf der radial verlaufenden Oberfläche des Aktivteils verläuft. Die Nut tritt in der Regel auf der Stirnseite des Rotors bzw. Stators aus. Am Austritt der Nut auf der Stirnseite befindet sich die Nutgrenze.

Unter einer Oberfläche kann hierbei eine radial nach innen zeigende Oberfläche (beispielsweise innenliegende Mantelfläche bei einem Stator) bzw. eine ratial nach außen zeigende Oberfläche (beispielsweise Mantelfläche bei einem Rotor) verstanden sein. Die Öffnungen der zumindest einen Nut befinden sich bei einem Rotor bzw. Stator auf den Stirnseiten des jeweiligen Grundkörpers. Bei einem Stator oder Rotor einer elektrischen Maschine als Aktivteil vorliegen, ist die zumindest eine Nut in axialer Richtung (Rotationsrichtung) verlaufende, als Aussparung in die oben ausgeführte Oberfläche, zu verstehen. Die Nutgrenze befindet sich dabei auf den Stirnseiten des Rotors bzw. Stators.

Der Grundkörper kann vorteilhaft aus einem Blechpaket gefertigt sein oder ein solches aufweisen.

Die Nut oder die Nuten in einem Grundkörper verlaufen zwar meist axial (parallel zur Rotationsachse) um die radiale Oberfläche des Grundkörpers verteilt. Es sind aber auch andere Verläufe denkbar. Eine Nut ist auch als Öffnung, Aussparung, Bohrung und/oder Ausschnitt durch den Grundkörper, regelmäßig in Rotationsrichtung, hindurch denkbar.

Ein elastisches Material ist ein Material, welches verformbar und/oder dehnbar ist. Das elastische Material weist vorteilhaft ein, im Vergleich zu der Vergussmasse vermindertes, Elastizitätsmodul auf. Vorteilhaft weist ein elastisches Material eine gummiartige Konsistenz auf.

Das elastische Material ist insbesondere zwischen der Vergussmasse und dem Aktivteil an den Stellen lokalisiert, in denen die benachbarten Materialen (z.B. das Blechpaket und die Vergussmasse) aufgrund von Formschluss die unterschiedliche Wärmeausdehnungskoeffizienten und daraus resultierende unterschiedliche Wärmedehnungen nicht kompensieren können. Vorteilhafterweise weist das elastische Material eine hohe Wärmeleitfähigkeit auf, um einen Wärmestau zu vermeiden.

Unterschiedliche Ausdehnungen führen zu mechanischen Spannungen zwischen der Vergussmasse und dem Grundkörper. Mechanische Spannungen führen durch Rissbildung und/oder Materialermüdung zu einer reduzierten Lebensdauer des Aktivteils.

Das elastische Material kann weiter zur Isolierung der Wicklung in Bezug zu dem Grundkörper dienen.

Einsatzgebiete der Erfindung sind beispielsweise ein Stator und/oder ein Rotor einer elektrischen Maschine, ein Elektromagnet, ein Spannungswandler oder ein Transformator. Besonders gut ist die Erfindung geeignet, um einen Rotor und/oder einen Stator mit zumindest einem Blechpaket und zumindest einer Wicklung, die in eine Vergussmasse eingebettet ist, an der Nutgrenze zu entlasten. Hier ist wird unter der Nutgrenze der Austritt der Nut aus dem Grundkörper und/oder die Öffnung an der, insbesondere axial verlaufenden, Oberlfäche des Grundkörpers verstanden.

Die Erfindung kann allgemein dort eingesetzt werden, wo unterschiedliche Komponenten einer mechanischen Belastung ausgesetzt sind und eine Komponente, welche an zumindest einer anderen Komponente befestigt ist, eine erhöhte Sprödigkeit, ein erhöhtes Elastizitätsmodul und/oder eine erhöhte Steifigkeit aufweist.

Die erfindungsgemäße Ausführung ist auch anwendbar, falls anstelle einer Wicklung Metallstäbe durch die Nut / die Aussparung in dem Grundkörper verlaufen.

In einer vorteilhaften Ausgestaltung des Aktivteils weist der Grundkörper ein Blechpaket auf oder ist ein Blechpaket. Weiter ist vorteilhaft im Grundkörper zumindest eine Aussparung für die Wicklung vorgesehen.

Im Betrieb des Aktivteils ist die zumindest eine Wicklung in der Regel von elektrischem Strom durchflossen. Durch den Stromfluss wird ein magnetisches Feld induziert. Das magnetische Feld verändert seine Stärke und Ausrichtung mit der Zeit.

Der Grundkörper ist in der Regel mit Aussparungen versehen, in denen die Wicklungen verlaufen. Die Wicklungen sind in der Aussparung von der Vergussmasse umgeben. Falls elektrischer Strom durch die Wicklung verläuft, wird durch die stromdurchflossene Wicklung ein Magnetfeld induziert. Durch den Grundkörper wird das induzierte Magnetfeld verstärkt und/oder geformt.

Die Aussparungen/Nut verlaufen parallel zur Rotationsachse des Aktivteils, z.B. des Rotors. Oft sind die Aussparungen nahe der inneren und/oder äußeren Mantelfläche des Aktivteils eingebracht. Durch diese Ausführung können die Wicklungen vorteilhaft leicht in den Grundkörper eingebracht werden.

In einer weiteren vorteilhaften Ausgestaltung ist das elastische Material auf zumindest einer Stirnseite des Grundkörpers, insbesondere zwischen einem Endblech oder einer Endscheibe des Grundkörpers und der Randfläche der Vergussmasse, vorgesehen.

Unter einem Endblech wird das (jeweils) äußere Blech des Blechpakets des Grundkörpers verstanden. Falls der Grundkörper kein Blechpaket aufweist dann ist das Endblech eine gedachte oder aufgebrachte äußerste Schicht, die orthogonal zu einer Rotationsachse bzw. orthogonal zur Mantelfläche verläuft.

Unter einer Endscheibe wird ein zusätzliches massives Bauteil verstanden, das zur Übertragung des Paketierdrucks und optional zur Anbindung des Wickelkopfs dienen kann. Optional wird mit der Endscheibe auch zumindest einen Teil der elektrischen Verbindungen / der elektrischen Schaltung befestigt.

Das elastische Material ist vorteilhaft auf zumindest einer Außenseite des Endbleches aufgebracht, wobei das elastische Material zumindest bereichsweise auf der einen Seite von dem Grundkörper bzw. dem Endblech und auf der anderen Seite von der Vergussmasse beaufschlagt ist.

Diese Ausgestaltung ist besonders vorteilhaft, da das Endblech und/oder eine Seitenfläche des Grundkörpers leicht mit dem elastischen Material beaufschlagbar sind. Das Endblech ist in Teil des Grundkörpers.

In einer weiteren vorteilhaften Ausgestaltung ist das elastische Material im Bereich der zumindest einen Nutgrenze vorgesehen.

Vorteilhaft kann das elastische Material in einem kleinen Bereich um die Nutgrenze herum besonders dick aufgetragen sein.

Durch die Konzentration des elastischen Materials auf die Umgebung der zumindest einen Nutgrenze ist der Bereich mit der höchsten mechanischen Spannung bei Wärmeausdehnung durch die Eigenschaften des elastischen Materials entlastet. Weiter wird bei dieser Ausgestaltung vorteilhaft nur wenig elastisches Material eingesetzt, was die Stabilität des erfindungsgemäßen Aktivteils erhöht.

Bei einer weiteren vorteilhaften Ausgestaltung ist zwischen einer Aussparung des Grundkörpers und der von der Vergussmasse umschlossenen Wicklung das elastische Material vorgesehen.

Bei dieser Ausführungsform kann beispielsweise eine Folie aus dem elastischen Material auf die Innenwände der Nut befestigt sein. Das elastische Material kann auch durch Spritzguss auf die Innenwände der Nut aufgebracht sein. Diese Ausgestaltung ist auf Grund der guten Absorption der Scherkräfte, die der Grundkörper auf die Vergussmasse wirken lässt, besonders vorteilhaft. Weiter ist die Isolierung zwischen der Wicklung und dem Grundkörper verstärkt. Ein direkter Kontakt der Wicklung, die nur minimal isoliert ist, mit dem, in der Regel metallischen, Grundkörper wird somit vorteilhaft verhindert. Zudem ist die Isolierung der Wicklung beim Einbringen der Wicklung in die Aussparung des Grundkörpers besser vor Beschädigung geschützt.

In einer weiteren vorteilhaften Ausgestaltung weist das elastische Material eine Dicke von einem Millimeter bis zu 5 Zentimeter auf.

Die Dicke des, auf den Grundkörper oder auf die Vergussmasse aufgebrachten, elastischen Materials richtet sich nach den Eigenschaften des elastischen Materials sowie der Größe des Grundkörpers bzw. der Wicklung.

Bei einer weiteren vorteilhaften Ausgestaltung weist der Grundkörper im Bereich der Nutgrenzen eine Senke auf.

Unter einer Senke wird eine beispielsweise kegelförmige Schräge an den angrenzenden Flächen des Grundkörpers und der (etwa) orthogonal dazu verlaufenden Innenfläche der Aussparung des Grundkörpers im Bereich der Nutgrenze verstanden. Die Nutgrenze befindet sich auf der Oberfläche des Grundkörpers, insbesondere an den Stirnseiten des Grundkörpers. Die Senke kann unterschiedliche Formen n der Kontur annehmen. Vorteilhaft wird die Senke in den Grundkörper mit einem Schneidwerkzeug eingefügt. Eine Senke ist insbesondere dann vorhanden, wenn eine scharfe Kante am Rande einer Aussparung eines Grundkörpers entgratet wird.

Besonders vorteilhaft vergrößert die Senke den Bereich und die Fläche, auf dem der Grundkörper mit dem elastischen Material beaufschlagt wird. Gleichzeitig kann mehr elastisches Material zwischen der Vergussmasse und dem Grundkörper eingebracht werden, ohne dass die Stabilität des Aktivteils vermindert wird.

Bei einer weiteren vorteilhaften Ausgestaltung ist das elastische Material ein Elastomer, ein Silikonwerkstoff, ein Fluorsilikonwerkstoff oder ein Fluorelastomere.

Das elastische Material besteht vorteilhaft aus einem Kunststoff, der nicht spröde ist. Das elastische Material kann aus einem Kunststoff sein, wobei als Kunststoffe Elastomere und silikonhaltige Werkstoffe aufgrund ihrer Dehnbarkeit geeignet sind. Vorteilhaft sind die oben genannten Substanzen auch besonders langlebig in ihren elastischen Eigenschaften. Fluorsilikonwerkstoffe sind besonders widerstandsfähig gegenüber äußeren thermischen, chemischen und mechanischen Einflüssen.

Zur vereinfachten Verarbeitung der Elastomere kann der Einsatz von thermoplastischen Elastomeren vorteilhaft sein.

Zur Herstellung eines solchen Aktivteils wird vorteilhaft der Grundkörper mit einem elastischen Material bereichsweise beaufschlagt, wobei in einem weiteren Schritt die Wicklung in die Aussparung eingeführt wird und wobei die Wicklung und das elastische Material zumindest teilweise von der Vergussmasse eingegossen wird.

Bei der Herstellung des Aktivteils wird vorteilhaft die Wicklung in die Aussparung eingebracht. Das elastische Material wird, beispielsweise durch eine Vulkanisierung auf den Grundkörper, insbesondere auf das Endblech, aufgebracht. Die Wicklung kann entweder vor dem Aufbringen des elastischen Materials auf den Grundkörper oder nach dem Aufbringen des elastischen Materials auf den Grundkörper in die Aussparung des Grundkörpers eingebracht werden. Vorteilhaft wird im Anschluss des Einbringens der Wicklung in die Aussparung die Wicklung mit der Vergussmasse umschlossen. Die Umschließung erfolgt vorteilhaft mit einer Vollvergusstechnik. Gegebenenfalls erfolgt die Umschließung der Wicklung mit der Vergussmasse und die Lokalisierung des elastischen Materials in einem koordinierten Schritt.

Im Folgenden wird die Erfindung anhand der in den Figuren dargestellten Ausführungsbeispiele näher beschrieben und erläutert. Der Fachmann ist hierbei in der Lage, die in den Figuren gezeigten Ausführungsbeispiele zu kombinieren. Es zeigen:
FIG 1 einen Ausschnitt eines Aktivteils,
FIG 2 einen weiteren Ausschnitt eines Aktivteils,
FIG 3 einen weiteren Ausschnitt eines Aktivteils,
FIG 4 einen weiteren Ausschnitt eines Aktivteils sowie
FIG 5 einen weiteren Ausschnitt eines Aktivteils.

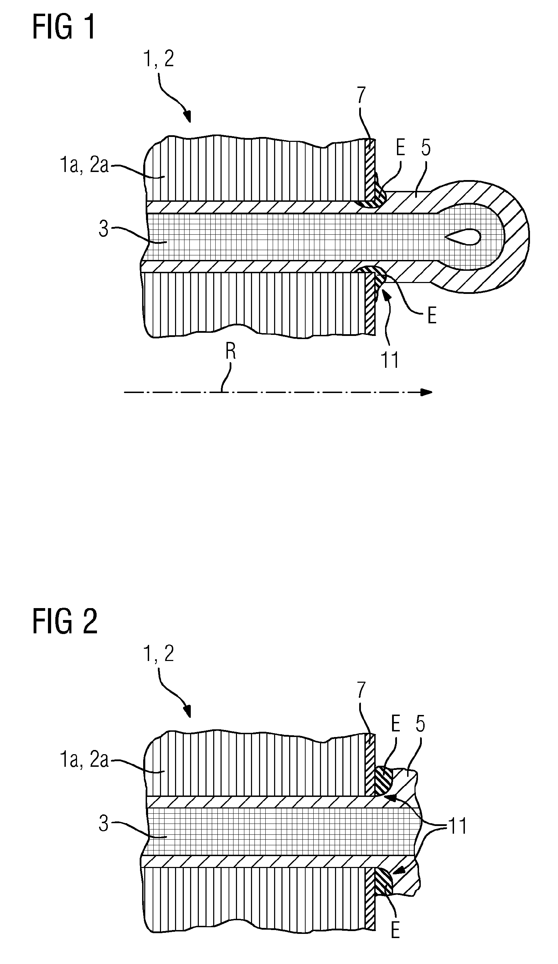

FIG 1 zeigt einen Ausschnitt eines Aktivteils 1, 2. Das Aktivteil weist einen Grundkörper 1a, 2a, eine Wicklung 3, eine Vergussmasse 5, wobei die Vergussmasse 5 die Wicklung 3 umgibt, sowie ein elastisches Material E auf. Der Grundkörper 1a, 2a, hier als Blechpaket dargestellt, weist an der Stirnseite ein Endblech 7 auf. Das Endblech 7 ist an der Nutgrenze der Aussparung angebracht. Das Endblech 7 bildet eine Stirnseite des Grundkörpers 1a, 2a. Die Wicklung 3 verläuft durch eine Aussparung in dem Grundkörper 1a, 2a. Im Bereich der Nutgrenze 11, das ist der Bereich, in dem die Aussparung aus der Oberfläche des Grundkörpers 1a, 2a ragt, befindet sich das elastische Material E, wobei das elastische Material E die Nutgrenze 10 abdeckt. Das elastische Material E dient zur Entlastung der Vergussmasse 5, falls die Vergussmasse 5 oder der Grundkörper 1a, 2a sich durch thermische Ausdehnung verformt und somit eine mechanische Spannung auf das jeweils andere Element (Grundkörper 1a, 2a / Endblech 7, Vergussmasse 5) auswirkt.

Gezeigt ist hier, dass die Wicklung 3 parallel zur Rotationsachse R des Aktivteils 1, 2 verläuft. Die Rotationsachse R ist die Rotationsachse R des Rotors, falls das Aktivteil 1, 2 ein Rotor 1 ist oder die Rotationsachse R wird durch die innere Einhüllende eines Stators 2 ummantelt. Das elastische Material E weist in der Regel ein geringeres Elastizitätsmodul als der Grundkörper 1a, 2a oder die Vergussmasse 5 auf.

FIG 2 zeigt einen weiteren Ausschnitt eines Aktivteils 1, 2. Auch in dieser Ausführungsform ist der Grundkörper 1a, 2a ein Blechpaket, wobei das Blechpaket an seiner Stirnseite ein Endblech 7 aufweist. Auf dem Endblech 7 ist das elastische Material E aufgebracht. Der Grundkörper 1a, 2a weist eine Aussparung auf, wobei durch die Aussparung die Wicklung 3 verläuft. Die Wicklung 3 ist von der Vergussmasse 5 umschlossen. Im Bereich der Nutgrenze 11, jedoch auf dem Endblech 7, ist zwischen der Stirnseite des Endblechs 7 und der über die Aussparung überstehende Vergussmasse 5 das elastische Material E eingefügt.

Das elastische Material E kann, wie hier gezeigt, mit der Vergussmasse 5 abschließen oder sich über das gesamte Endblech 7 erstrecken. Bei einer unterschiedlichen Längenausdehnung des Grundkörpers 1a, 2a und der Wicklung 3 bzw. der Vergussmasse 5 wirkt das elastische Material E wie eine Feder, die zur Entlastung der Vergussmasse 5 im Bereich der Nutgrenze 11 dient. Es ist in dieser Ausführungsform nicht von überragender Bedeutung, welche Form die Vergussmasse 5 in ihrer Kontur aufweist.

Gezeigt ist, dass die Kontur der Vergussmasse 5 zur Aussparung bzw. Nutgrenze 11 hin dünner wird. Jedoch kann auch eine gerade Kontur des elastischen Materials E vorliegen, wobei die Dicke des aufgetragenen elastischen Materials E auf dem Endblech 7 auch konstant sein kann.

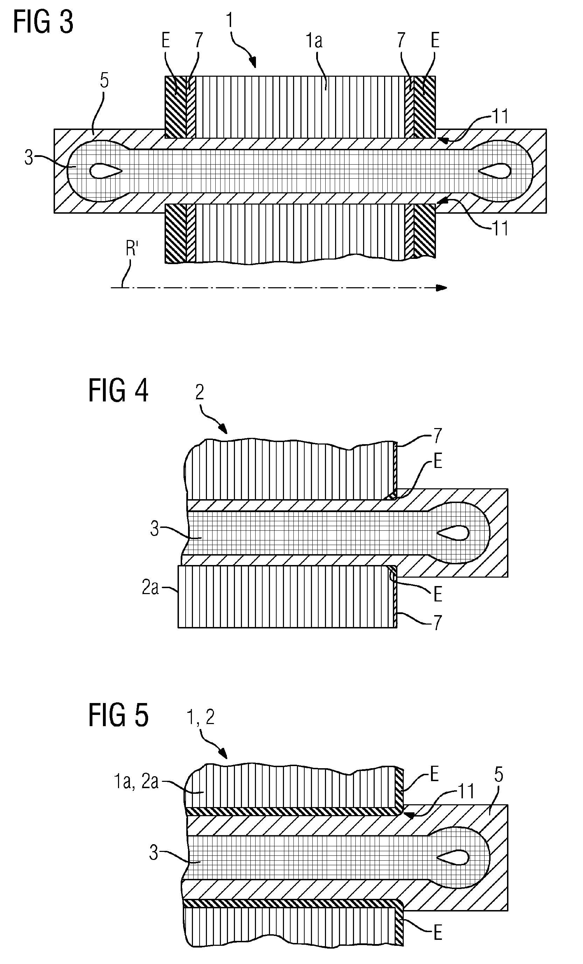

FIG 3 zeigt einen weiteren Ausschnitt eines Aktivteils 1, 2, wobei das Aktivteil 1, 2 einen Teil eines Rotors 1 (oder Stator 2) darstellt. Wie in den FIG 1 und 2 ist auch in der FIG 3 ein Schnitt durch den Rotor 1 / den Stator 2 bzw. das Aktivteil 1, 2 gezeigt. Der Grundkörper 1a des Rotors 1 (wie hier gezeigt) weist eine Aussparung auf, wobei eine Wicklung 3 durch die Aussparung hindurch verläuft. Die Wicklung 3 ist von der Vergussmasse 5 umschlossen. Der Grundkörper 1a ist als Blechpaket ausgeführt, wobei das Blechpaket an seinen beiden Stirnseiten, orthogonal verlaufend zur Rotationsachse R des Rotors 1 jeweils ein Endblech 7 aufweist. Das Endblech 7 ist an beiden Seiten mit dem elastischen Material E beaufschlagt. In der Regel weist ein Aktivteil 1, 2 bzw. ein Grundkörper 1a, 2a zwei Endbleche 7 auf.

Die Vergussmasse 5 ragt bereichsweise über die Aussparung heraus, wobei an der Nutgrenze 11 entlang der Stirnseite die Vergussmasse 5 das elastische Material E beaufschlagt. Hier ist gezeigt, dass das Endblech 7 auf seiner nach außen steigenden Seite von dem elastischen Material E abdeckend beaufschlagt ist.

FIG 4 zeigt einen weiteren Ausschnitt eines Aktivteils 1, 2. Das Aktivteil 1, 2 weist einen Grundkörper 1a, 2a und eine Wicklung 3 auf. Die Wicklung 3 ist von der Vergussmasse 5 umgeben. Der Grundkörper 1a, 2a weist im Bereich der Nutgrenze 11 eine Senke auf, so dass die Nutgrenze 11 nicht eine rechtwinklige Kante in der Kontur zeigt, sondern eine kegelförmige Aussparung (Senke). Die Senke ist hier kegelförmig gezeigt. Es sind aber auch abgerundete Formen der Kontur denkbar.

Im Bereich der Nutgrenze 11 ist die Senke durch das elastische Material E ausgefüllt. Das elastische Material E kann dabei geringfügig über die eigentliche Form der Senke überstehen. Das elastische Material E kann auch noch Teile des Endbleches 7 des Grundkörpers 1a, 2a beaufschlagen. Der Grundkörper 1a, 2a ist hier als Blechpaket ausgeführt. Die Senke kann bei der Herstellung des Grundkörpers 1a, 2a, mit einem Schneidewerkzeug eingefügt werden, so dass eine besonders einfache Herstellung des Aktivteils 1, 2 möglich ist.

Der Zwischenraum zwischen der Wicklung 3 und dem Grundkörper 1a, 2a, insbesondere in der Aussparung des Grundkörpers 1a, 2a, durch den die Wicklung 3 verläuft, ist vorteilhaft durch die Vergussmasse 5 ausgefüllt.

Mit Hilfe des elastischen Materials E ist eine vereinfachte Positionierung der Wicklung 5 in der Aussparung bei der Herstellung des Aktivteils 1, 2 möglich. Zur Verbesserung der Isolation der Wicklung 3 in Bezug zu dem Grundköper kann das elastische Material E jedoch teilweise vor dem Verguss 5 entfernt werden oder von dem durch den Verguss 5 abgetragen werden.

Vorteilhaft werden mechanische Spannungen zwischen der Vergussmasse 5 und dem Grundkörper 1a, 2a besonders gut ausgeglichen.

FIG 5 zeigt einen weiteren Ausschnitt eines Aktivteils 1, 2. Das hier gezeigte Aktivteil 1, 2 weist einen Grundkörper 1a, 2a mit Aussparung auf, wobei die Wicklung 3 durch die Aussparung des Grundkörpers 1a, 2a verläuft. Die Wicklung 3 ist von der Vergussmasse 5 ummantelt. Zwischen der Vergussmasse 5 und der inneren Fläche der Aussparung des Grundkörpers 1a, 2a ist hier über den gesamten Bereich das elastische Material E ausgebreitet. Zumindest bereichsweise beaufschlagt das elastische Material E das Endblech 7 des Grundkörpers 1a, 2a. Das elastische Material E kann hier auch durch eine Folie repräsentiert sein, die bereichsweise auf den Grundkörper 1a, 2a sowie auf die Innenfläche der Aussparung aufgebracht wird. Die Folie kann auch eine unterschiedliche Dicke aufweisen, wobei die Folie aus dem elastischen Material E in Bereichen, in denen die Vergussmasse 5, insbesondere in Rotationsrichtung R von dem Grundkörper 1a, 2a trennt, eine höhere Dicke aufweisen kann als im Inneren der Aussparung. Vorteilhaft ist auf dem Endblech 7 bereichsweise eine dickere Schicht aus elastischem Material E aufgebracht.

Im Allgemeinen wird zur Herstellung des Aktivteils 1, 2 vorteilhaft das elastische Material E, beispielsweise die Folie, auf den Grundkörper 1a, 2a aufgebracht. In einem weiteren Schritt wird die Wicklung 3 in die Aussparung eingebracht und die Wicklung 3 mit der Vergussmasse 5 umgeben.

Die Erfindung betrifft zusammengefasst ein Aktivteil 1, 2 einer elektrischen Maschine, insbesondere einen Rotor 1 oder einen Stator 2. Zur Verbesserung der Widerstandsfähigkeit des Aktivteils 1, 2 sind in Bereichen, zwischen einem Grundkörper 1a, 2a, beispielsweise einem Blechpaket, und der Vergussmasse 5 dort ein elastisches Material E eingefügt, wo mechanische Spannungen aufgrund von unterschiedlichen Wärmeausdehnungen die Gefahr einer Rissbildung in der Vergussmasse 5 verursachen können. Beispielsweise wird das elastische Material E im Bereich von Nutgrenzen 11 zwischen dem Grundkörper 1a, 2a und der Vergussmasse 5 eingefügt, wobei die Vergussmasse 5 die Wicklung 3 umgibt.

## Patentansprüche

1. Aktivteil (1, 2) einer elektrischen Maschine, insbesondere ein Rotor (1) oder ein Stator (2), aufweisend einen Grundkörper (1a, 2a) und eine Wicklung (3), wobei die Wicklung (3) von einer Vergussmasse (5) umschlossen ist, wobei das Aktivteil (1, 2) zumindest bereichsweise zwischen der Vergussmasse (5) und dem Grundkörper (1a, 2a) ein elastisches Material (E) aufweist.

2. Aktivteil (1, 2) nach Anspruch 1, wobei der Grundkörper (1a, 2a) ein Blechpaket aufweist oder ein Blechpaket ist und der im Grundkörper (1a, 2a) eine Aussparung für die Wicklung (3) vorgesehen ist.

3. Aktivteil (1, 2) nach einem der vorangehenden Ansprüche, wobei das elastische Material (E) auf zumindest einer Stirnseite des Grundkörpers, insbesondere zwischen einem Endblech (7) des Grundkörpers (1a, 2a) und der Randfläche der Vergussmasse (5), vorgesehen ist.

4. Aktivteil (1, 2) nach einem der vorangehenden Ansprüche, wobei das elastische Material (E) im Bereich der zumindest einen Nutgrenze (11) vorgesehen ist.

5. Aktivteil (1, 2) nach einem der vorangehenden Ansprüche, wobei zwischen einer Aussparung des Grundkörpers (1a, 2a) und der von der Vergussmasse (5) umschlossenen Wicklung (3) das elastische Material vorgesehen ist.

6. Aktivteil (1, 2) nach einem der vorangehenden Ansprüche, wobei das elastische Material (E) eine Dicke von einigen Millimeter bis zu 5 Zentimeter aufweist.

7. Aktivteil (1, 2) nach einem der vorangehenden Ansprüche, wobei der Grundkörper (1a, 2a) im Bereich der Nutgrenzen (11) eine **Senke** aufweist.

8. Aktivteil (1, 2) nach einem der vorangehenden Ansprüche, wobei das elastische Material (E) ein Elastomer, ein Silikonwerkstoff, ein Fluorsilikonwerkstoff oder ein Fluorelastomere ist.

9. Aktivteil (1) nach einem der Ansprüche 1 bis 8, wobei das Aktivteil ein Rotor (1) ist.

10. Aktivteil (2) nach einem der Ansprüche 1 bis 8, wobei das Aktivteil (2) ein Stator (2) ist.

11. Elektrische Maschine, aufweisend zumindest ein Aktivteil gemäß einem der Ansprüche 1 bis 7.

12. Verfahren zur Herstellung eines Aktivteils (1, 2) nach einem der Ansprüche 1 bis 8, wobei der Grundkörper (1a, 2a) mit einem elastischen Material (E) bereichsweise beaufschlagt wird, wobei in einem weiteren Schritt die Wicklung (3) in die Aussparung eingeführt wird und wobei die Wicklung (3) und das elastische Material (E) zumindest teilweise von der Vergussmasse (5) eingegossen wird.
